# EUROPEAN PATENT SPECIFICATION

(11) **EP 2 437 154 B1**
(45) Date of publication and mention of the grant of the patent: **23.12.2020**
(21) Application number: 11183429.7
(22) Date of filing: 30.09.2011
(51) Int. Cl.: G06F 3/0488, G06F 3/01, G06F 3/0483, G06F 1/16

(54) **Apparatus and method for turning e-book pages in portable terminal**
Vorrichtung und Verfahren zum Umblättern von E-Book-Seiten auf einem portablen Endgerät
Appareil et procédé pour tourner les pages d'un livre électronique dans un terminal portable

(30) Priority: 01.10.2010 KR 20100095815; 28.01.2011 KR 20110008606
(43) Date of publication of application: 04.04.2012
(73) Proprietor: Samsung Electronics Co., Ltd., Suwon-si, Gyeonggi-do, 443-742 (KR)
(72) Inventor: Lee, Sung-Min, Gyeonggi-do (KR); Lee, Dal-Kwang, Gyeonggi-do (KR)
(74) Representative: Nederlandsch Octrooibureau

(56) References cited:
- EP-A2- 2 104 026
- WO-A1-2009/128593
- US-A- 5 463 725
- US-A1- 2006 277 478
- US-A1- 2007 188 450
- US-B1- 6 300 933
- US-B1- 6 448 986

## Description

### BACKGROUND OF THE INVENTION

The present invention relates to a portable terminal. More particularly, the present invention relates to an apparatus and method for turning pages of an electronic-book (e-book) in a portable terminal having an e-book function.

The use of portable terminals is rapidly increasing due to convenience of portability, and thus service providers (or terminal vendors) are competitively developing terminals having more convenient functions to ensure more users. For example, the portable terminals provide various functions such as a phone book, a game, a scheduler, a short message, an Internet, an e-mail, an alarm, an MPEG Audio Layer-3 (MP3), a digital camera, an electronic dictionary, an electronic (e-book), etc.

The e-book for showing text contents has been introduced by using an electronic display mechanism as one of media for providing information in replacement of a conventional paper book. The e-book operates in such a manner that the text contents are stored in a flash memory or a built-in hard disk and then the stored text contents are displayed through a display screen. The e-book has an advantage in that a large volume of books are stored all together and can be read at a later time by selecting a desired part of the contents.

In this case, the contents can be displayed only in a limited area through the display screen, and thus a User Interface (UI) for providing a function of moving or scrolling a page is required to continuously show a next part of the contents. In general, a part of the text contents can be displayed on a screen while moving a page according to a page down/up function that uses a key input tool provided in the e-book. In this manner, a user can read a whole part of the text contents stored in the e-book.

However, an interface for turning a page through key manipulation is the most basic form of a direction control mechanism, and is not devised based on an ergonomic design which considers user convenience, Therefore, it is difficult for the user to naturally turn a page of the contents.

EP2104026 relates to an electronic document reproduction apparatus supporting a preview function upon outputting an electronic book, and a reproducing method thereof. The electronic document reproduction apparatus Includes: an Input/output unit for outputting contents of an electronic document and receiving a user's Instruction from a user; a storage unit for storing data of the electronic document; and a controller for searching for an output position of a corresponding electronic document according to the user's Instruction Input through the Input/output unit, and displaying the corresponding electronic document, wherein the controller receives a preview execution Instruction through the Input/ output unit and provides a preview function for a corresponding position to the electronic document, and the controller receives a page selection Instruction and sets
a corresponding page as an output position.

US5463725 discloses a user interface for making information available to a user provides a display similar to a printed book or magazine. In order to "turn the page" of the displayed book, the user touches the screen with his hand or a pointing device, and moves it across the screen.

US6300933 relates to an electronic apparatus includes an acceleration sensor, an inclination detector, a pushbutton switch, a use condition detector, a screen control determiner, a screen, and a screen controller. The apparatus is controlled in a method that enables the execution of control in which the contents of operation intended by the user are exactly reflected. The acceleration sensor and the inclination detector detect an inclination of the apparatus. The use condition detector detects the use of the apparatus, based on whether the pushbutton switch is turned on or not. The screen control determiner determines whether or not to execute screen control, based on both the inclination detected by the inclination detector and the use of the apparatus detected by the use condition detector.

WO2009/128593 relates to a mobile device and a method for controlling a user interface of the mobile device are disclosed. The method includes detecting a movement of the mobile device as applied by a user s gesture, scrolling at least one of a page displayed on the display and a selection point on the display according to the detected movement of the mobile device.

US2007/188450 relates to a system for displaying data in a portable data processing system with a plurality of display interfaces. Data is displayed within a first display interface of the portable data processing system. A user input, which is a change in orientation of the portable data processing system, is detected. After determining a type of change in orientation of the portable data processing system, data is displayed within the first display interface or a second display interface of the portable data processing system based upon the type of change in orientation.

US2006/277478 relates to a method wherein a determination is made as to when to display and hide obstructive user interface elements. Obstructive user interface elements are removed from the display when not needed by the user and displayed when needed by the user.

US6448986 relates to a control program or operating system managing a graphical user interface of an electronic device in such a way that substantially all of the screen of data remains visible irrespective of whether toolbars or graphical objects are displayed or hidden.

### SUMMARY OF THE INVENTION

An aspect of the present invention is to solve at least the above-mentioned problems and/or disadvantages and to provide at least the advantages described below. Accordingly, an aspect of the present invention is to provide an apparatus and method for turning pages of an electronic book (e-book) in a portable terminal having an e-book function.

Another aspect of the present invention is to provide an apparatus and method for turning pages of an e-book in an analog fashion in a portable terminal having an e-book function so that a user can change pages of contents in the same natural manner as turning pages of an actual paper book.

In accordance with an aspect of the present invention, a method for turning pages of an e-book in a portable terminal having an e-book function is are defined in claims 1 and 4.

It will be appreciated that executing the e-book can also be described as executing, running, or carrying out the instructions of an e-book application or program.

In the context of this specification, a touch down may also be described as the touching, pressing, or making contact with a touch sensitive input means, such as a touch sensitive screen on which pages of the e-book are displayed, for example with a finger, stylus, or other suitable implement or tool. A touch down therefore corresponds to an event consisting of bringing a finger, stylus, implement or tool down into contact with the touch sensitive input means.

Similarly, a touch up may also be described as ceasing or terminating a touching of the touch sensitive input means. It represents the termination of a contact with the touch sensitive input means. In other words, a touch up is a disengagement from, or a release of the touch sensitive input means. A touch up therefore corresponds to an event consisting of bringing a finger, stylus, implement or tool away from the touch sensitive input means, breaking contact. A touch up can also be described as a lifting off, from the touch sensitive input means, of the finger, stylus, implement or tool.

In the context of this specification, a drag may also be described as the movement of a finger, stylus, implement or tool across a touch sensitive input means whilst maintaining contact with that input means. Typically, a drag will be preceded by, or begin with a touch down (contact is first made), and be followed by, or terminated by a touch up (contact is broken/released). Additionally, one drag event may immediately follow another, such that the end position of one drag is the start position of the next.

In accordance with another aspect of the present invention, a portable terminal as defined in claim 7 is provided.

Further advantageous embodiments are defined in the dependent claims.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a block diagram illustrating a structure of a portable terminal having an electronic-book (e-book) function according to an exemplary embodiment of the present invention;
FIG. 2 illustrates an example of a method for turning pages of an e-book on a single-page basis in an analog fashion in a portable terminal having an e-book function according to a first example not part of the invention;
FIG. 3 is a flowchart illustrating a method for turning pages of an e-book on a single-page basis in an analog fashion in a portable terminal having an e-book function according to a first example not part of the invention;
FIG. 4 illustrates an example of a method for turning pages of an e-book on a multi-page basis in an analog fashion in a portable terminal having an e-book function according to a second example not part of the invention;
FIG. 5A and FIG. 5B are flowcharts illustrating a method for turning pages of an e-book on a multi-page basis in an analog fashion in a portable terminal having an e-book function according to a second example not part of invention;
FIG. 6 illustrates an example of a method for supporting a bookmark for an e-book in a portable terminal having an e-book function according to a third example not part of the invention;
FIG. 7A and FIG. 7B are flowcharts illustrating a method for supporting a bookmark for an e-book in a portable terminal having an e-book function according to a third example not part of the invention;
FIG. 8 illustrates an example of a method for tuning pages of an e-book in an analog fashion by using a 3-axis sensor in a portable terminal having an e-book function according to an embodiment of the present invention;
FIG. 9 illustrates an example of a method for tuning pages of an e-book in an analog fashion by using a 3-axis sensor in a portable terminal having an e-book function according to an exemplary embodiment of the present invention;
FIG. 10 illustrates an example of a method for tuning pages of an e-book in an analog fashion by using a 3-axis sensor in a portable terminal having an e-book function according to an exemplaryan embodiment of the present invention;
FIG. 11A and FIG. 11B are flowcharts illustrating an example of a method for tuning pages of an e-book in an analog fashion by using a 3-axis sensor in a portable terminal having an e-book function according to an fourth exemplary embodiment of the present invention;
FIG. 12A and FIG. 12B are flowcharts illustrating an example of a method for tuning pages of an e-book in an analog fashion by using a 3-axis sensor in a portable terminal having an e-book function according to an exemplary embodiment of the present invention;
FIG. 13A and FIG. 13B are flowcharts illustrating an example of a method for tuning pages of an e-book in an analog fashion by using a 3-axis sensor in a portable terminal having an e-book function according to an exemplary embodiment of the present invention;
FIG. 14 illustrates an example of a method for turning pages of an e-book in an analog fashion by using an acceleration sensor in a portable terminal having an e-book function according to an example not part of the invention; and
FIG. 15 is a flowchart illustrating a method for turning pages of an e-book in an analog fashion by using an acceleration sensor in a portable terminal having an e-book function according to an example not part of the invention.

### DETAILED DESCRIPTION OF EXEMPLARY EMBODIMENTS

Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

The present invention described hereinafter relates to an apparatus and method for turning pages of an electronic book (e-book) in an analog fashion in a portable terminal having an e-book function.

A portable terminal described hereinafter includes a cellular phone having a touch panel, a Personal Communication System (PCS), a Personal Digital Assistant (PDA), an International Mobile Telecommunication-2000 (IMT2000) terminal, etc. The following description will be based on general configurations of the above examples.

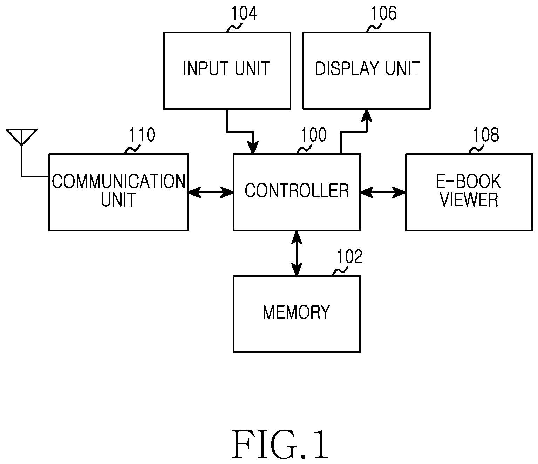

FIG. 1 is a block diagram illustrating a structure of a portable terminal having an e-book function according to an exemplary embodiment of the present invention.

Referring to FIG. 1, the portable terminal includes a controller 100, a memory 102, an input unit 104, a display unit 106, an e-book viewer 108, and a communication unit 110.

The controller 100 provides overall control to the portable terminal. According to the present invention, the controller 100 processes a function of turning pages of an e-book in an analog fashion.

The memory 102 stores a microcode of a program for processing and control of the controller 100, a variety of reference data, temporary data that is generated while programs are performed, and a variety of rewritable data. In particular, according to the present invention, the memory 102 stores a program for turning the pages of the e-book in the analog fashion.

The input unit 104 includes numeral key buttons and a plurality of function key buttons to provide the controller 100 with key button input data corresponding to a key button pressed by the user.

The display unit 106 displays information such as state information, which is generated while the portable terminal operates, a limited number of characters, a large volume of moving and still pictures, etc. In addition to its typical function, according to the present invention, the display unit 106 is configured with a touch panel type and performs a function of the input unit 104. That is, the display unit 106 detects a touch input of the user and transmits the detected touch input to the controller 100.

The e-book viewer 108 performs a function for turning the pages of the e-book on a single-page basis or on a multi-page basis in the analog fashion so that the user can turn the page of contents naturally as if the user turns a page of an actual paper book. Further, the e-book viewer 108 supports a bookmark function for the e-book.

The communication unit 110 transmits and receives a Radio Frequency (RF) signal which is input and output through an antenna. For example, in a transmitting process, data to be transmitted is subject to a channel-coding process and a spreading process, and then the data is transformed to an RF signal. In a receiving process, the RF signal is received and transformed to a base-band signal, and the base-band signal is subject to a de-spreading process and a channel-decoding process, thereby restoring the data.

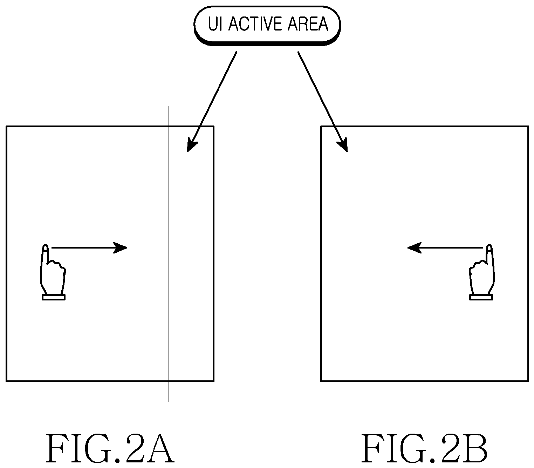

FIG. 2 illustrates an example of a method for turning pages of an e-book on a single-page basis in an analog fashion in a portable terminal having an e-book function according to a first example not part of the invention.

Referring to FIG. 2, the terminal executes the e-book function and displays a pre-set page of the e-book selected by a user on a screen. In this case, a right portion of the screen is partially divided for a right UI active area, and a left portion of the screen is partially divided for a left UI active area. Herein, the right UI active area and the left UI active area are pre-set according to the terminal.

As illustrated in FIG. 2A, if a touch down is input from the left of the pre-set right UI active area of the e-book and a drag and touch up is input to the right while maintaining the touch down input, then the terminal displays an immediately previous page on the screen. As illustrated in FIG. 2B, if a touch down is input from the right of the pre-set left UI active area of the e-book and a drag and touch up is input to the left while maintaining the touch down input, then the terminal displays an immediately next page on the screen.

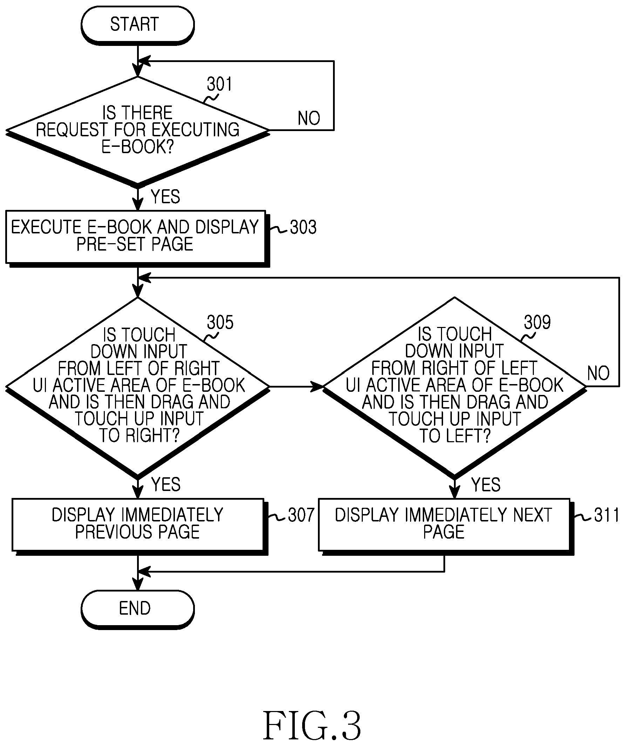

FIG. 3 is a flowchart illustrating a method for turning pages of an e-book on a single-page basis in an analog fashion in a portable terminal having an e-book function according to a first example not part of the invention.

Referring to FIG. 3, the terminal detects a request for executing the e-book function by user's key manipulation in step 301.

If the request for executing the e-book function is detected in step 301, proceeding to step 303, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 305, the terminal determines whether a touch down is input from the left of a pre-set right UI active area of the e-book and a drag and touch up is input to the right while maintaining the touch down input.

If it is determined in step 305 that the touch down is input from the left of the pre-set right UI active area of the e-book and the drag and touch up is input to the right while maintaining the touch down input, proceeding to step 307, the terminal displays an immediately previous page on a screen.

Otherwise, if it is determined in step 305 that the touch down is not input from the left of the pre-set right UI active area of the e-book and the drag and touch up is not input to the right while maintaining the touch down input, proceeding to step 309, the terminal determines whether a touch down is input from the right of a pre-set left UI active area of the e-book and a drag and touch up is input to the left while maintaining the touch down input.

If it is determined in step 309 that the touch down is input from the right of the pre-set left UI active area of the e-book and the drag and touch up is input to the left while maintaining the touch down input, proceeding to step 311, the terminal displays an immediately next page on the screen.

Otherwise, if it is determined in step 309 that the touch down is not input from the right of the pre-set left UI active area of the e-book and the drag and touch up is not input to the left while maintaining the touch down input, returning to step 305, the subsequent steps are repeated.

Thereafter, the procedure of FIG. 3 ends.

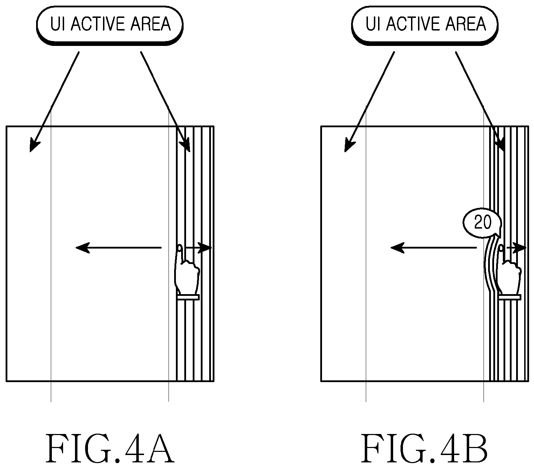

FIG. 4 illustrates an example of a method for turning pages of an e-book on a multi-page basis in an analog fashion in a portable terminal having an e-book function according to a second example not par of the invention.

Referring to FIG. 4, the terminal executes the e-book function and displays a pre-set page of the e-book selected by a user on a screen. In this case, a right portion of the screen is partially divided for a right UI active area, and a left portion of the screen is partially divided for a left UI active area. Herein, the right UI active area and the left UI active area are pre-set according to the terminal.

If a touch down is input in the pre-set right UI active area of the e-book, then the terminal displays a right lateral side of the e-book. In this case, as illustrated in FIG. 4A, when a drag and touch up is input to the left while maintaining the touch down input, the terminal displays an immediately next page. On the other hand, as illustrated in FIG. 4B, when a drag is input to the right while maintaining the touch down input, the terminal displays a page number increased by an extent of the drag in the right lateral side of the e-book, and when a drag and touch up is input to the left while maintaining the drag input, the terminal displays a next page corresponding to the increased page number.

Although not shown, if a touch down is input in the pre-set left UI active area of the e-book, then the terminal displays a left lateral side of the e-book. In this case, when a drag and touch up is input to the right while maintaining the touch down input, the terminal displays an immediately previous page on the screen. On the other hand, when a drag is input to the left while maintaining the touch down input, the terminal displays a page number decreased by an extent of the drag in the left lateral side of the e-book, and when a drag and touch up is input to the right while maintaining the drag input, the terminal displays a previous page corresponding to the decreased page number.

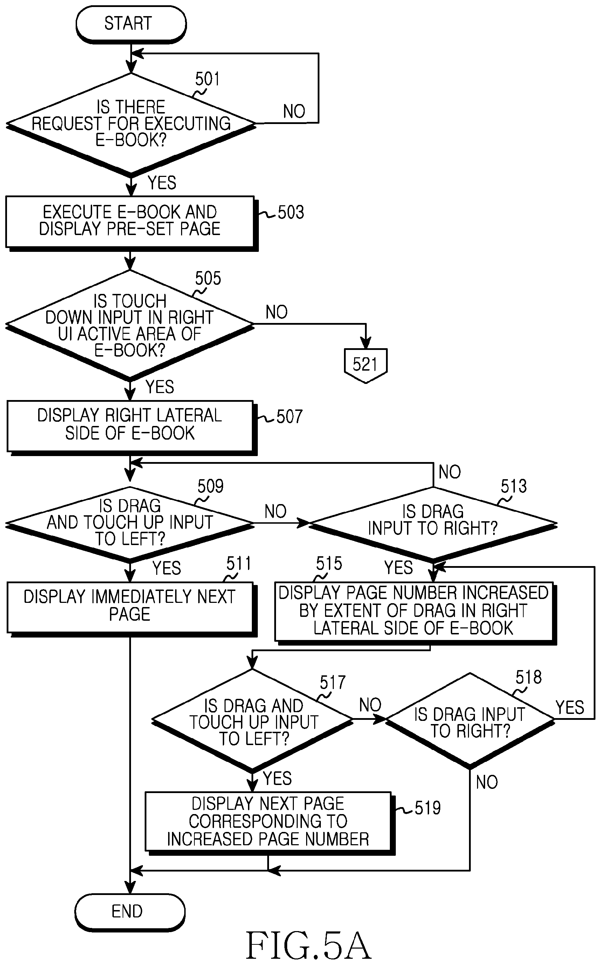

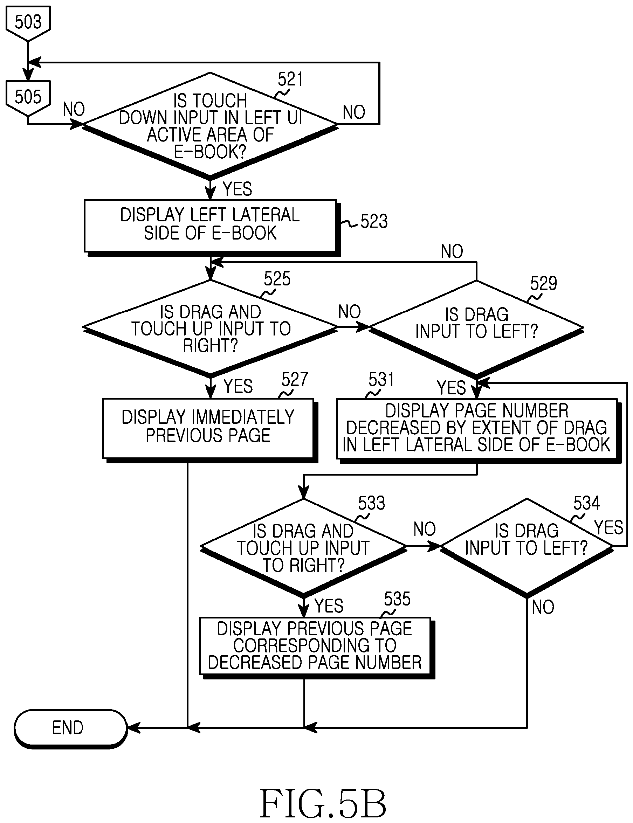

FIG. 5A and FIG. 5B are flowcharts illustrating a method for turning pages of an e-book on a multi-page basis in an analog fashion in a portable terminal having an e-book function according to a second example not part of the invention.

Referring to FIG. 5A and FIG. 5B, the terminal detects a request for executing the e-book function by user's key manipulation in step 501.

If the request for executing the e-book function is detected in step 501, proceeding to step 503, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 505, the terminal determines whether a touch down is input in a pre-set right UI active area of the e-book.

If it is determined in step 505 that the touch down is input in the pre-set right UI active area of the e-book, proceeding to step 507, the terminal displays a right lateral side of the e-book, and the procedure proceeds to step 509.

In step 509, the terminal determines whether a drag and touch up is input to the left while maintaining the touch down input.

If it is determined in step 509 that the drag and touch up is input to the left while maintaining the touch down input, proceeding to step 511, the terminal displays an immediately next page on a screen.

Otherwise, if it is determined in step 509 that the drag and touch up is not input to the left while maintaining the touch down input, proceeding to step 513, the terminal determines whether a drag is input to the right while maintaining the touch down input.

If it is determined in step 513 that the drag is input to the right while maintaining the touch down input, proceeding to step 515, the terminal displays a page number increased by an extent of the drag in the right lateral side of the e-book, and then the procedure proceeds to step 517. Herein, the page number displayed in the right lateral side is increased in proportion to a speed depending on the drag.

In step 517, the terminal determines whether a drag and touch up is input to the left while maintaining the drag input.

If it is determined in step 517 that the drag and touch up is input to the left while maintaining the drag input, proceeding to step 519, the terminal displays a next page corresponding to the increased page number.

Otherwise, if it is determined in step 517 that the drag and touch up is not input to the left while maintaining the drag input, proceeding to step 518, the terminal determines whether the drag is continuously input to the right while maintaining the drag input.

If it is determined in step 518 that that drag is continuously input to the right while maintaining the drag input, returning to step 515, the subsequent steps are repeated.

Otherwise, if it is determined in step 518 that the drag is not continuously input to the right while maintaining the drag input, the procedure of FIG. 5 ends. For example, if the touch up is input while maintaining the drag input without no drag input to the right or left, the procedure of FIG. 5 ends.

Meanwhile, if it is determined in step 513 that the drag is not input to the right while maintaining the touch down input, returning to step 509, the subsequent steps are repeated.

If it is determined in step 505 that the touch down is not input in the pre-set right UI active area of the e-book, proceeding to step 521, the terminal determines whether a touch down is input in a pre-set left UI active area of the e-book.

If it is determined in step 521 that the touch down is input in the pre-set left UI active area of the e-book, proceeding to step 523, the terminal displays a left lateral side of the e-book, and the procedure proceeds to step 525.

In step 525, the terminal determines whether a drag and touch up is input to the right while maintaining the touch down input.

If it is determined in step 525 that the drag and touch up is input to the right while maintaining the touch down input, proceeding to step 527, the terminal displays an immediately previous page.

Otherwise, if it is determined in step 525 that the drag and touch up is not input to the right while maintaining the touch down input, proceeding to step 529, the terminal determines whether a drag is input to the left while maintaining the touch down input.

If it is determined in step 529 that the drag is input to the left while maintaining the touch down input, proceeding to step 531, the terminal displays a page number decreased by an extent of the drag in the left lateral side of the e-book, and then the procedure proceeds to step 533. Herein, the page number displayed in the left lateral side is decreased in proportion to a speed depending on the drag.

In step 533, the terminal determines whether a drag and touch up is input to the right while maintaining the drag input.

If it is determined in step 533 that the drag and touch up is input to the right while maintaining the drag input, proceeding to step 535, the terminal displays a previous page corresponding to the decreased page number.

Otherwise, if it is determined in step 533 that the drag and touch up is not input to the right while maintaining the drag input, proceeding to step 534, the terminal determines whether the drag is continuously input to the left while maintaining the drag input.

If it is determined in step 534 that that drag is continuously input to the left while maintaining the drag input, returning to step 531, the subsequent steps are repeated.

Otherwise, if it is determined in step 534 that the drag is not continuously input to the left while maintaining the drag input, the procedure of FIG. 5 ends. For example, if the touch up is input while maintaining the drag input without no drag input to the left or right, the procedure of FIG. 5 ends.

Meanwhile, if it is determined in step 529 that the drag is not input to the left while maintaining the touch down input, returning to step 525, the subsequent steps are repeated.

If it is determined in step 521 that the touch down is not input in the pre-set left UI active area of the e-book, returning to step 505, the subsequent steps are repeated.

Thereafter, the procedure of FIG. 5 ends.

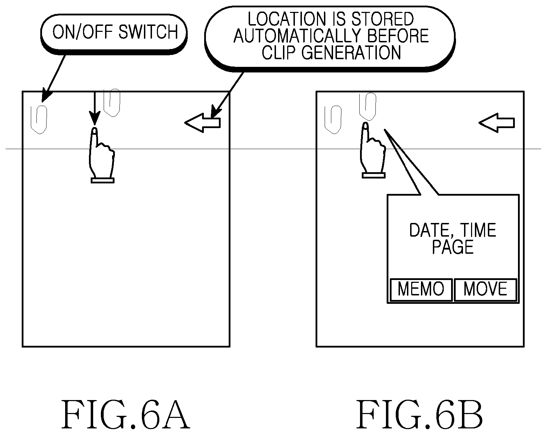

FIG. 6 illustrates an example of a method for supporting a bookmark for an e-book in a portable terminal having an e-book function according to a third example not part of the invention.

Referring to FIG. 6, the terminal performs the e-book function, displays a pre-set page of the e-book selected by a user on a screen, and activates a bookmark function by touching a bookmark On/Off switch. In this case, an upper portion of the screen is partially divided for an upper UI active area, and the upper UI active area is pre-set according to the terminal. The bookmark On/Off switch for activating/inactivating the bookmark function may be located in a left portion of the pre-set upper UI active area of the e-book, and can be displayed, for example, in a clip shape. In addition, a menu for automatically storing a position before moving to a bookmark page corresponding to a clip may be located in a right portion of the pre-set upper UI active area of the e-book, and can be displayed, for example, in an arrow shape.

As illustrated in FIG. 6A, if a touch down is input in the pre-set upper UI active area of the e-book and a drag is input downwards while maintaining the touch down input, then the terminal determines that the bookmark needs to be added and generates a clip corresponding to the bookmark to be added. Herein, a location of the clip can move according to a drag direction until a touch up is input while maintaining the drag input. Thereafter, if the touch up is input while maintaining the drag input, the terminal places the generated clip to a location at which the touch up is input. Herein, a shape, color, or the like of the generated clip can be determined according to pre-set information. Alternatively, while placing the generated clip to the location at which the touch up is input, an input window is displayed via a popup window to receive information such as the shape, color, or the like of the generated clip from the user, and the shape, color, or the like of the generated clip can be modified according to the input information.

As illustrated in FIG. 6B, if a touch down is input for a clip corresponding to the previously added bookmark, then the terminal displays a corresponding bookmark page, and upon detection of a long touch for the clip corresponding to the previously added bookmark, the terminal determines that information on the previously added bookmark needs to be displayed, and thus displays information on a corresponding bookmark via a popup window. Herein, the long touch implies a continuous touch, for example, about 1 or 2 seconds, and the information on the bookmark may include information on a date of generating the bookmark, a time of generating the bookmark, a bookmark page, etc. In addition, the popup window can display not only the information on the bookmark but also a memo menu for writing a memo and a move menu for changing a location of the bookmark. In this case, when the user selects the memo menu, a memo window can be displayed to receive a content of memo for the bookmark, and when the user selects the move menu, a location change mode of the bookmark can be performed to receive the changed location of the clip corresponding to the bookmark.

Although not shown, if a touch down is input for the clip for the previously added bookmark, the terminal displays a corresponding bookmark page, and if a drag and touch up is input to the left/right while maintaining the touch down input for the clip corresponding to the previously added bookmark on which the bookmark page is displayed, then the terminal determines that it is required to move the bookmark page corresponding to the previously added bookmark, and thus moves to the bookmark page.

Although not shown, if a touch down is input for the clip corresponding to the previously added bookmark and a drag and touch up is input upwards while maintaining the touch down input, then the terminal determines that the previously added bookmark needs to be removed, and thus deletes the clip corresponding to the bookmark.

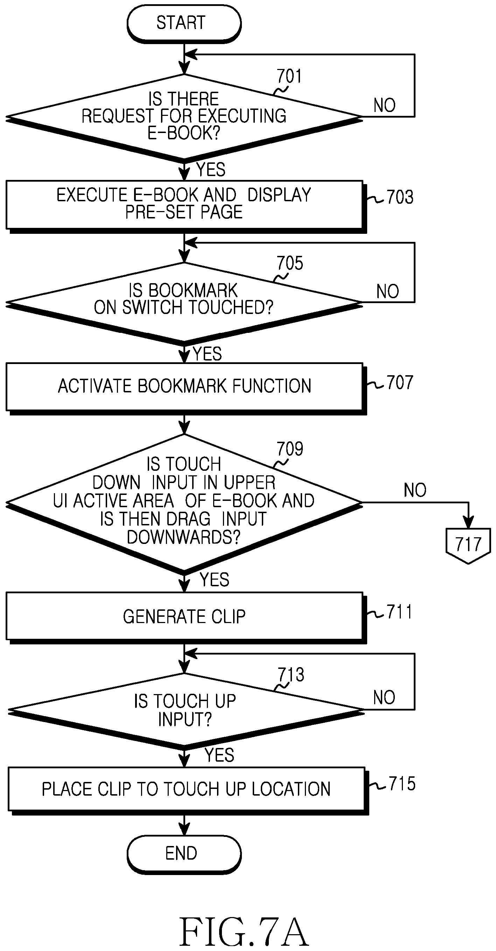

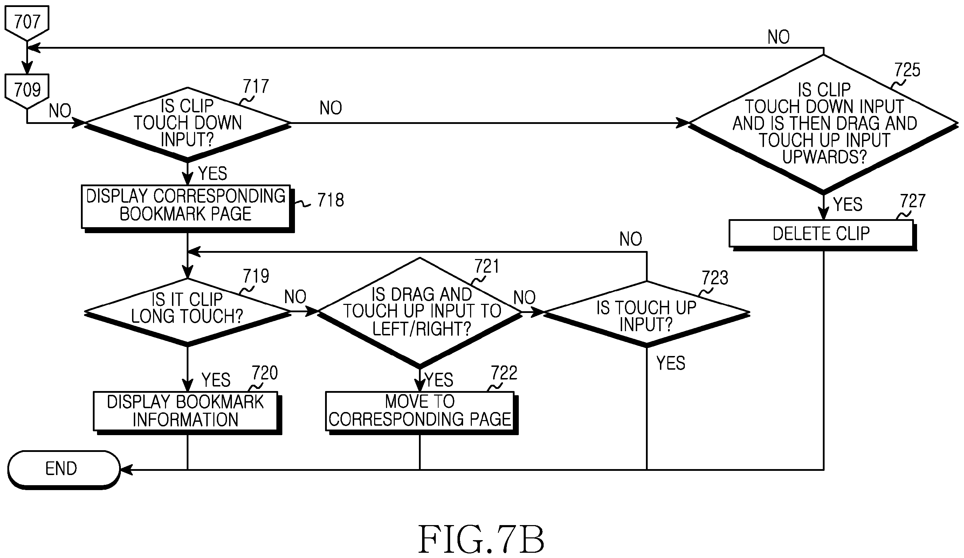

FIG. 7A and FIG. 7B are flowcharts illustrating a method for supporting a bookmark for an e-book in a portable terminal having an e-book function according to a third example not part of the invention.

Referring to FIG. 7A and FIG. 7B, the terminal detects a request for executing the e-book function by user's key manipulation in step 701.

If the request for executing the e-book function is detected in step 701, proceeding to step 703, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 705, the terminal determines whether a bookmark On switch is touched (i.e., whether a touch up is input after a touch down). Herein, the bookmark On switch can be located, for example, in a left portion of a pre-set upper UI active area of the e-book, and may be displayed in a clip shape. According to another example, the bookmark On switch can be implemented as one switch for performing both a function of the bookmark On switch and a function of a bookmark Off switch. In this case, when the switch is touched in the bookmark Off state, a state transition occurs to the bookmark On state to activate the bookmark function, and when the switch is touched in the bookmark On state, a state transition occurs to the bookmark Off state to inactivate the bookmark function.

If it is detected in step 705 that the bookmark On switch is touched, proceeding to step 707, the terminal activates the bookmark function, and then the procedure proceeds to step 709.

In step 709, the terminal determines whether a touch down is input in the pre-set upper UI active area of the e-book and a drag is input downwards while maintaining the touch down input.

If it is determined in step 709 that the touch down is input in the pre-set upper UI active area of the e-book and the drag is input downwards while maintaining the touch down input, proceeding to step 711, then the terminal generates a clip corresponding to a bookmark to be added, and the procedure proceeds to step 713. Herein, a location of the clip can move according to a drag direction until a touch up is input while maintaining the drag input.

In step 713, the terminal determines whether a touch up is input while maintaining the drag input.

If it is determined in step 713 that the touch up is input while maintaining the drag input, proceeding to step 715, the terminal places the generated clip to a location at which the touch up is input, and then the procedure of FIG. 7 ends. Herein, a shape, color, or the like of the generated clip can be determined according to pre-set information. Alternatively, while placing the generated clip to the location at which the touch up is input, an input window is displayed via a popup window to receive information such as the shape, color, or the like of the generated clip from the user, and the shape, color, or the like of the generated clip can be modified according to the input information.

Meanwhile, if it is determined in step 709 that the touch down is not input in the pre-set upper UI active area of the e-book and the drag is not input downwards while maintaining the touch down input, proceeding to step 717, the terminal determines whether a touch down is input for a clip corresponding to a previously added bookmark.

If it is determined in step 717 that the touch down is input for the clip corresponding to the previously added bookmark, proceeding to step 718, the terminal displays a corresponding bookmark page, and the procedure proceeds to step 719.

In step 719, the terminal determines whether a long touch is detected for the clip corresponding to the previously added bookmark on which the bookmark page is indicated. Herein, the long touch implies a continuous touch, for example, about 1 or 2 seconds.

If it is determined in step 719 that the long touch for the clip corresponding to the previously added bookmark on which the bookmark page is displayed is detected, the terminal determines that it is required to display information on the previously added bookmark on which the bookmark page is indicated, and proceeding to step 720, displays the information on the bookmark via a popup window, and then the procedure of FIG. 7 ends. Herein, the information on the bookmark may include information on a date of generating the bookmark, a time of generating the bookmark, a bookmark page, etc. In addition, the popup window can display not only the information on the bookmark but also a memo menu for writing a memo and a move menu for changing a location of the bookmark. In this case, when the user selects the memo menu, a memo window can be displayed to receive a content of memo for the bookmark, and when the user selects the move menu, a location change mode of the bookmark can be performed to receive the changed location of the clip corresponding to the bookmark.

Otherwise, if it is determined in step 719 that the long touch is not detected for the clip corresponding to the previously added bookmark on which the bookmark page is indicated, proceeding to step 721, the terminal determines whether a drag and touch up is input to the left/right while maintaining the touch down input.

If it is determined in step 721 that the drag and touch up is input to the left/right while maintaining the touch down input, the terminal determines that it is required to move to a bookmark page corresponding to the previously added bookmark on which the bookmark page is indicated, and proceeding to step 722, moves to a corresponding bookmark page, and then the procedure of FIG. 7 ends.

Otherwise, if it is determined in step 721 that the drag and touch up is not input to the left/right while maintaining the touch down input, proceeding to step 723, the terminal determines whether a touch up is input while maintaining the touch down input.

If it is determined in step 723 that the touch up is input while maintaining the touch down input, the procedure of FIG. 7 ends.

Otherwise, if it is determined in step 723 that the touch up is not input while maintaining the touch down input, returning to step 719, the subsequent steps are repeated.

Meanwhile, if it is determined in step 717 that the touch down is not input for the clip corresponding to the previously added bookmark, proceeding to step 725, the terminal determines whether a touch down is input for the clip corresponding to the previously added bookmark and a drag and touch up is input upwards (e.g., up to the end of the upper direction) while maintaining the touch down input.

If it is determined in step 725 that the touch down is input for the clip corresponding to the previously added bookmark and the drag and touch up is input upwards while maintaining the touch down input, the terminal determines that the previously added bookmark needs to be removed. In step 727, the terminal deletes the clip corresponding to the bookmark, and then the procedure of FIG. 7 ends.

Otherwise, if it is determined in step 725 that the touch down is not input for the clip corresponding to the previously added bookmark and the drag and touch up is not input upwards while maintaining the touch down input, returning to step 709, the subsequent steps are repeated.

Thereafter, the procedure of FIG. 7 ends.

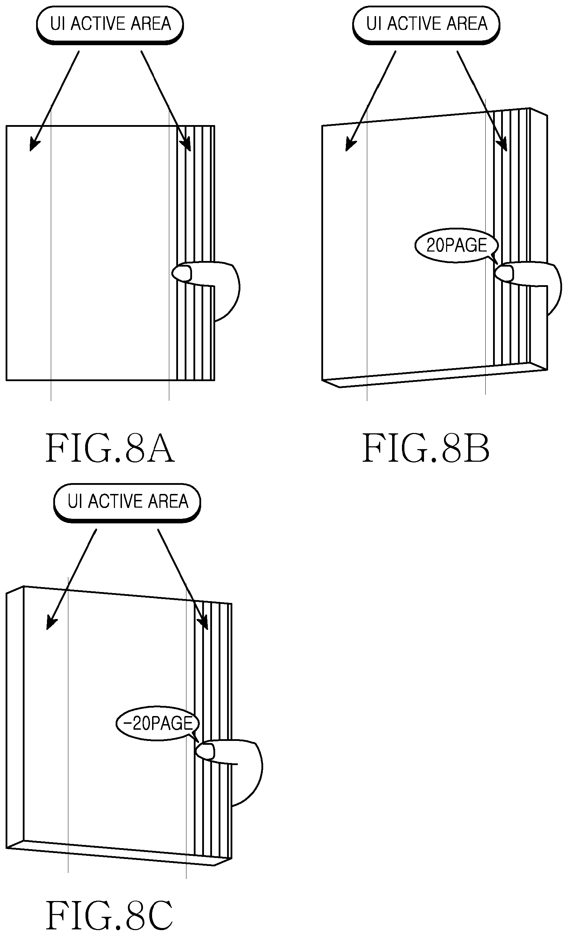

FIG. 8 illustrates an example of a method for tuning pages of an e-book in an analog fashion by using a 3-axis sensor in a portable terminal having an e-book function according to an exemplary embodiment of the present invention.

Referring to FIG. 8, the terminal executes the e-book function and displays a pre-set page of the e-book selected by a user on a screen. In this case, a right portion of the screen is partially divided for a right UI active area, and a left portion of the screen is partially divided for a left UI active area. Herein, the right UI active area and the left UI active area are pre-set according to the terminal.

If a touch down is input in the pre-set right UI active area of the e-book, as illustrated in FIG. 8A, the terminal displays a right lateral side of the e-book and drives the 3-axis sensor to detect an inclination of the terminal. In this case, as illustrated in FIG. 8B, upon detection of an inclination value greater than or equal to a threshold in a left direction, the terminal displays a next page to the screen on a single-page basis at a speed in proportion to the inclination value detected in the process of detecting the inclination greater than or equal to the threshold in the left direction. In this case, the terminal can display a User Interface (UI) for turning a page forward on the single-page basis to the screen. When a drag and touch up is input to the right while maintaining the touch down input, the terminal drives the 3-axis sensor to detect the inclination of the terminal, and upon detection of the inclination value greater than or equal to the threshold in the left direction, the terminal displays a next page corresponding to a page number increased by an extent of the drag to the screen. In this case, the terminal can display a UI for turning a page forward on a multi-page basis to the screen. As illustrated in FIG. 8C, upon detection of the inclination value greater than or equal to the threshold in a right direction, the terminal displays a previous page to the screen on the single-page basis at a speed in proportion to the inclination value detected in the process of detecting the inclination greater than or equal to the threshold in the right direction. In this case, the terminal can display a UI for turning a page back on the single-page basis to the screen.

Although not shown, on the contrary, if a touch down is input in the pre-set left UI active area of the e-book, the terminal displays a left lateral side of the e-book and drives the 3-axis sensor to detect the inclination of the terminal. In this case, upon detection of the inclination value greater than or equal to the threshold in the right direction, the terminal displays a previous page to the screen on the single-page basis at a speed in proportion to the inclination value detected in the process of detecting the inclination greater than or equal to the threshold in the right direction. In this case, the terminal can display a UI for turning a page back on the single-page basis to the screen. When a drag and touch up is input to the left while maintaining the touch down input, the terminal drives the 3-axis sensor to detect the inclination of the terminal, and upon detection of the inclination value greater than or equal to the threshold in the right direction, the terminal displays a page number decreased by an extent of the drag to the screen. In this case, the terminal can display a UI for turning a page back on the multi-page basis to the screen. When the left lateral side of the e-book is displayed and the 3-axis sensor is driven to detect the inclination of the terminal, upon detection of the inclination value greater than or equal to the threshold in the left direction, the terminal displays a next page to the screen on the single-page basis at a speed in proportion to the inclination value detected in the process of detecting the inclination greater than or equal to the threshold in the left direction. In this case, the terminal can display a UI for turning a page forward on the single-page basis to the screen.

In a state where the terminal drives the 3-axis sensor to display a UI for turning a page forward (or back) on the single-page basis on the screen, upon detection of the inclination in the opposite direction, the terminal can display a UI for turning a page back (or forward) on the single-page basis to the screen.

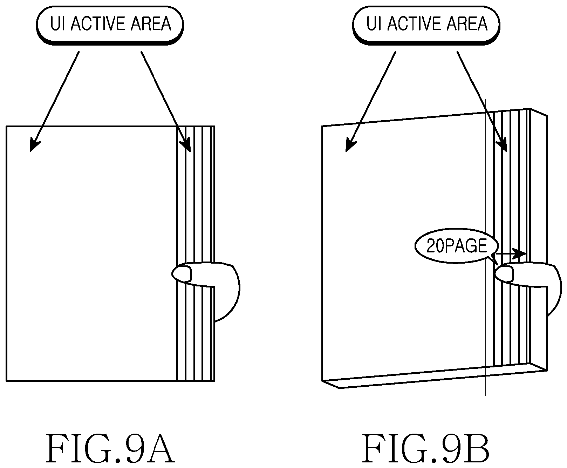

FIG. 9 illustrates an example of a method for tuning pages of an e-book in an analog fashion by using a 3-axis sensor in a portable terminal having an e-book function according to an exemplary embodiment of the present invention.

Referring to FIG. 9, if a touch down is input in a pre-set right UI active area as illustrated in FIG. 9A, then the terminal displays a right lateral side of the e-book. In this case, as illustrated in FIG. 9B, when a drag and touch up is input to the right while maintaining the touch down input, the terminal displays a page number increased by an extent of the drag to the right lateral side of the e-book, and drives the 3-axis sensor to detect an inclination of the terminal. Upon detection of an inclination value greater than or equal to a threshold in a left direction, the terminal displays a next page corresponding to the increased page number to the screen. In this case, the terminal can display a UI for tuning a page forward on a multi-page basis to the screen.

Although not shown, on the contrary, if a touch down is input in a pre-set left UI active area, the terminal displays a left lateral side of the e-book. In this case, when a drag and touch up is input to the left while maintaining the touch down input, the terminal displays a page number decreased by an extent of the drag to the left lateral side of the e-book, and drives the 3-axis sensor to detect the inclination of the terminal. Upon detection of the inclination value greater than or equal to the threshold in a right direction, the terminal displays a previous page corresponding to the decreased page number to the screen. In this case, the terminal can display a UI for tuning a page back on the multi-page basis to the screen.

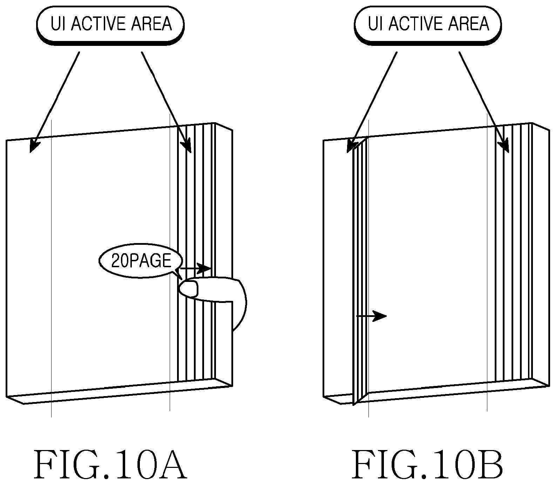

FIG. 10 illustrates an example of a method for tuning pages of an e-book in an analog fashion by using a 3-axis sensor in a portable terminal having an e-book function according to an exemplary embodiment of the present invention.

Referring to FIG. 10, the terminal displays a UI for turning a page forward on a multi-page basis to a screen as illustrated in FIG. 10A, and also displays a left lateral side where pages are being turned in a part of a left UI active area. In this case, if a touch down is input in the part of the left UI active area and a drag and touch up is input to the right while maintaining the touch down input, then the terminal can cancel the turning of several pages forward and can return to a page that is displayed before turning the several pages forward.

Although not shown, on the contrary, the terminal displays a UI for turning a page back on the multi-page basis to the screen, and also displays a right lateral side where pages are being turned in a part of a right UI active area. In this case, if a touch down is input in the part of the right UI active area and a drag and touch up is input to the left while maintaining the touch down input, then the terminal can cancel the turning of several pages back and can return to a page that is displayed before turning the several pages back.

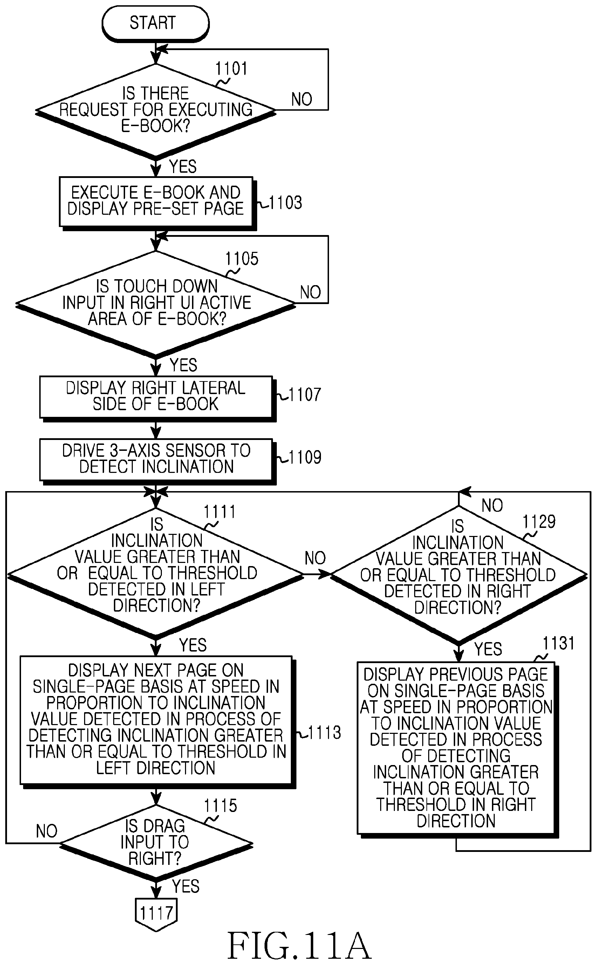

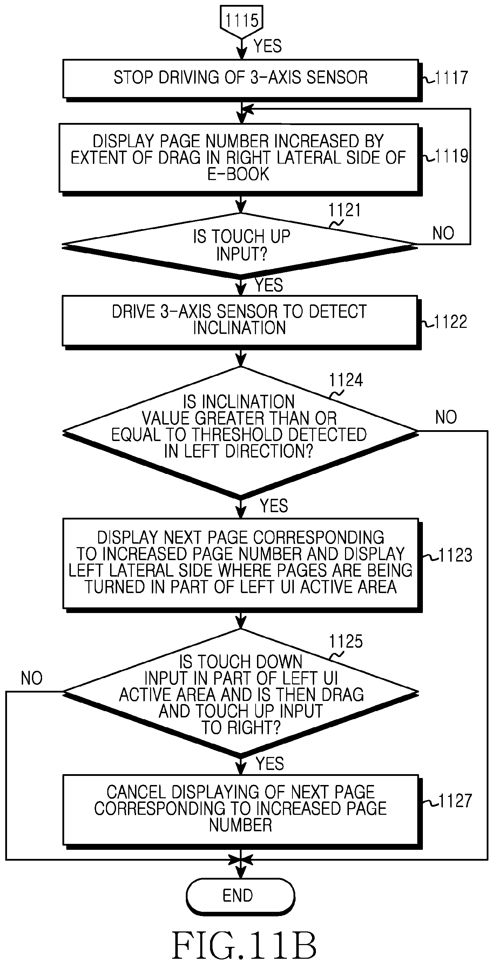

FIG. 11A and FIG. 11B are flowcharts illustrating an example of a method for tuning pages of an e-book in an analog fashion by using a 3-axis sensor in a portable terminal having an e-book function according to an exemplary embodiment of the present invention. The example of FIG. 11A and FIG. 11B is a case where a right lateral side is displayed upon touching a right UI active area of the e-book.

Referring to FIG. 11A and FIG. 11B, the terminal detects a request for executing the e-book function by user's key manipulation in step 1101.

If the request for executing the e-book function is detected in step 1101, proceeding to step 1103, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 1105, the terminal determines whether a touch down is input in a pre-set right UI active area of the e-book.

If it is determined in step 1105 that the touch down is input in the pre-set right UI active area of the e-book, proceeding to step 1107, the terminal displays the right lateral side of the e-book.

In step 1109, the terminal drives the 3-axis sensor to detect an inclination of the terminal. In step 1111, the terminal determines whether an inclination value greater than or equal to a threshold is detected in a left direction.

If it is determined in step 1111 that the inclination value greater than or equal to the threshold is detected in the left direction, proceeding to step 1113, the terminal displays a next page to a screen on a single-page basis at a speed in proportion to the inclination value detected in the process of detecting the inclination greater than or equal to the threshold in the left direction. For example, the greater the detected inclination value, the faster the speed of displaying the next page on the single-page basis. Herein, the terminal can display a UI for turning a page forward on the single-page basis to the screen. In this case, the terminal can report the movement of the page to the user by using voice, vibration, etc. For example, whenever a page is turned forward on the single-page basis, a sound for turning the page can be output. In addition, the terminal can display a popup window to display the number of pages which are turned forward or a current page number.

In step 1115, the terminal determines whether a drag is input to the right while maintaining the touch down input.

If it is determined in step 1115 that the drag is input to the right while maintaining the touch down input, proceeding to step 1117, the terminal stops the driving of the 3-axis sensor. In step 1119, the terminal displays a page number increased by an extent of the drag to the right lateral side of the e-book. In this case, the terminal stops the displaying of the UI for turning the page forward on the single-page basis, and displays a UI for holding a page.

In step 1121, the terminal determines whether a touch up is input while maintaining the drag input to the right.

If it is determined in step 1121 that the touch up is input while maintaining the drag input to the right, proceeding to step 1122, the terminal drives the 3-axis sensor to detect the inclination of the terminal. In step 1124, the terminal determines whether the inclination value greater than or equal to the threshold is detected in the left direction.

If it is determined in step 1124 that the inclination value greater than or equal to the threshold is not detected in the left direction, the procedure of FIG. 11 ends.

Otherwise, if it is determined in step 1124 that the inclination value greater than or equal to the threshold is detected in the left direction, proceeding to step 1123, the terminal displays a next page corresponding to the increased page number to the screen, and displays a left lateral side where pages are being turned in a part of a left UI active area. In this case, the terminal displays a UI for turning several pages forward to the screen at a slower speed than the UI for turning the pages forward on the single-page basis.

In step 1125, the terminal determines whether a touch down is input in the part of the left UI active area and a drag and touch up is input to the right while maintaining the touch down input.

If it is determined in step 1125 that the touch down is input in the part of the left UI active area and the drag and touch up is input to the right while maintaining the touch down input, proceeding to step 1127, the terminal cancels the displaying of the next page corresponding to the increased page number, and returns to a previous page displayed before turning several pages forward.

Otherwise, if it is determined in step 1125 that the touch down is not input in the part of the left UI active area or the drag and touch up is not input to the right while maintaining the touch down input, the procedure of FIG. 11 ends.

Meanwhile, if it is determined in step 1121 that the touch up is not input while maintaining the drag input to the right, returning to step 1119, the subsequent steps are repeated.

If it is determined in step 1115 that the drag is not input to the right while maintaining the touch down input, returning to step 1111, the subsequent steps are repeated.

If it is determined in step 1111 that the inclination value greater than or equal to the threshold is not detected in the left direction, proceeding to step 1129, the terminal determines whether the inclination value greater than or equal to the threshold is detected in the right direction.

If it is determined in step 1129 that the inclination value greater than or equal to the threshold is detected in the right direction, proceeding to step 1131, the terminal displays a previous page to the screen on the single-page basis at a speed in proportion to the inclination value detected in the process of detecting the inclination greater than of equal to the threshold in the right direction, and returning to step 1111, the subsequent steps are repeated. For example, the greater the detected inclination value, the faster the speed of displaying the previous page on the single-page basis. Herein, the terminal can display a UI for turning a page back on the single-page basis to the screen. In this case, the terminal can report the movement of the page to the user by using voice, vibration, etc. For example, whenever a page is turned back on the single-page basis, a sound for turning the page can be output. In addition, the terminal can display a popup window to display the number of pages which are turned back (indicated by '-') or a current page number.

Otherwise, if it is determined in step 1129 that the inclination value greater than or equal to the threshold is not detected in the right direction, returning to step 1111, the subsequent steps are repeated.

Thereafter, the procedure of FIG. 11 ends.

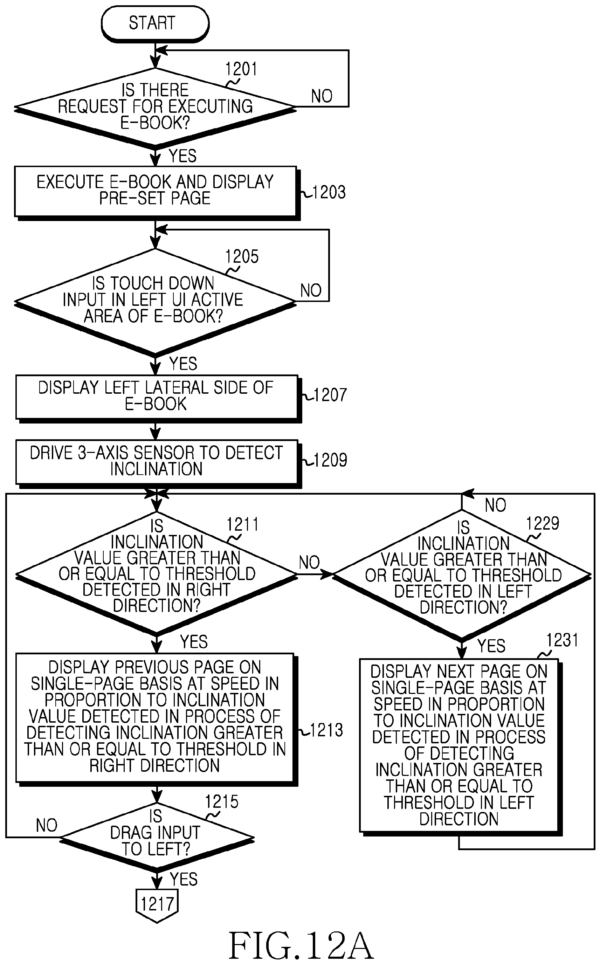

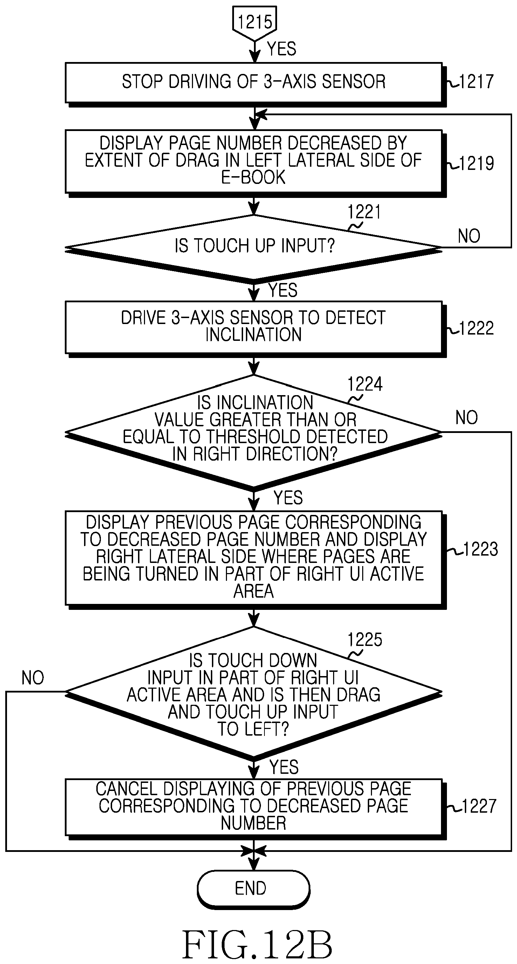

FIG. 12A and FIG. 12B are flowcharts illustrating an example of a method for tuning pages of an e-book in an analog fashion by using a 3-axis sensor in a portable terminal having an e-book function according to an exemplary embodiment of the present invention. The example of FIG. 12A and FIG. 12B is a case where a left lateral side is displayed upon touching a left UI active area of the e-book.

Referring to FIG. 12A and FIG. 12B, the terminal detects a request for executing the e-book function by user's key manipulation in step 1201.

If the request for executing the e-book function is detected in step 1201, proceeding to step 1203, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 1205, the terminal determines whether a touch down is input in a pre-set left UI active area of the e-book.

If it is determined in step 1205 that the touch down is input in the pre-set left UI active area of the e-book, proceeding to step 1207, the terminal displays the left lateral side of the e-book.

In step 1209, the terminal drives the 3-axis sensor to detect an inclination of the terminal. In step 1211, the terminal determines whether an inclination value greater than or equal to a threshold is detected in a right direction.

If it is determined in step 1211 that the inclination value greater than or equal to the threshold is detected in the right direction, proceeding to step 1213, the terminal displays a previous page to the screen on a single-page basis at a speed in proportion to the inclination value detected in the process of detecting the inclination greater than of equal to the threshold in the right direction. Herein, the terminal can display a UI for turning a page back on the single-page basis to the screen. In this case, the terminal can report the movement of the page to the user by using voice, vibration, etc. For example, whenever a page is turned back on the single-page basis, a sound for turning the page can be output. In addition, the terminal can display a popup window to display the number of pages which are turned back (indicated by '-') or a current page number.

In step 1215, the terminal determines whether a drag is input to the left while maintaining the touch down input.

If it is determined in step 1215 that the drag is input to the left while maintaining the touch down input, proceeding to step 1217, the terminal stops the driving of the 3-axis sensor. In step 1219, the terminal displays a page number decreased by an extent of the drag to the left lateral side of the e-book. In this case, the terminal stops the displaying of the UI for turning the page back on the single-page basis, and displays a UI for holding a page.

In step 1221, the terminal determines whether a touch up is input while maintaining the drag input to the left.

If it is determined in step 1221 that the touch up is input while maintaining the drag input to the left, proceeding to step 1222, the terminal drives the 3-axis sensor to detect the inclination of the terminal. In step 1224, the terminal determines whether the inclination value greater than or equal to the threshold is detected in the right direction.

If it is determined in step 1224 that the inclination value greater than or equal to the threshold is not detected in the right direction, the procedure of FIG. 12 ends.

Otherwise, if it is determined in step 1224 that the inclination value greater than or equal to the threshold is detected in the right direction, proceeding to step 1223, the terminal displays a previous page corresponding to the decreased page number to the screen, and displays a right lateral side of the turning page in a part of a right UI active area. In this case, the terminal displays a UI for turning several pages back to the screen at a slower speed than the UI for turning the pages back on the single-page basis.

In step 1225, the terminal determines whether a touch down is input in the part of the right UI active area and a drag and touch up is input to the left while maintaining the touch down input.

If it is determined in step 1225 that the touch down is input in the part of the right UI active area and the drag and touch up is input to the left while maintaining the touch down input, proceeding to step 1227, the terminal cancels the displaying of the previous page corresponding to the decreased page number, and returns to a previous page displayed before turning several pages back.

Otherwise, if it is determined in step 1225 that the touch down is not input in the part of the right UI active area or the drag and touch up is not input to the left while maintaining the touch down input, the procedure of FIG. 12 ends.

Meanwhile, if it is determined in step 1221 that the touch up is not input while maintaining the drag input to the left, returning to step 1219, the subsequent steps are repeated.

If it is determined in step 1215 that the drag is not input to the left while maintaining the touch down input, returning to step 1211, the subsequent steps are repeated.

If it is determined in step 1211 that the inclination value greater than or equal to the threshold is not detected in the right direction, proceeding to step 1229, the terminal determines whether the inclination value greater than or equal to the threshold is detected in the left direction.

If it is determined in step 1229 that the inclination value greater than or equal to the threshold is detected in the left direction, proceeding to step 1231, the terminal displays a next page to the screen on the single-page basis at a speed in proportion to the inclination value detected in the process of detecting the inclination greater than or equal to the threshold in the left direction. Herein, the terminal can display a UI for turning a page forward on the single-page basis to the screen. In this case, the terminal can report the movement of the page to the user by using voice, vibration, etc. For example, whenever a page is turned forward on the single-page basis, a sound for turning the page can be output. In addition, the terminal can display a popup window to display the number of pages which are turned forward or a current page number.

Otherwise, if it is determined in step 1229 that the inclination value greater than or equal to the threshold is not detected in the left direction, returning to step 1211, the subsequent steps are repeated.

Thereafter, the procedure of FIG. 12 ends.

Meanwhile, although not shown, when an inclination of an opposite direction is detected in a state where a UI for turning a page forward (or back) on the single-page basis to the screen, the terminal can drive the 3-axis sensor to display a UI for turning pages back (or forward) on the single-page basis to the screen. Herein, the terminal can report to the user that the page moves in a direction opposite to the previous case by using voice, vibration, etc.

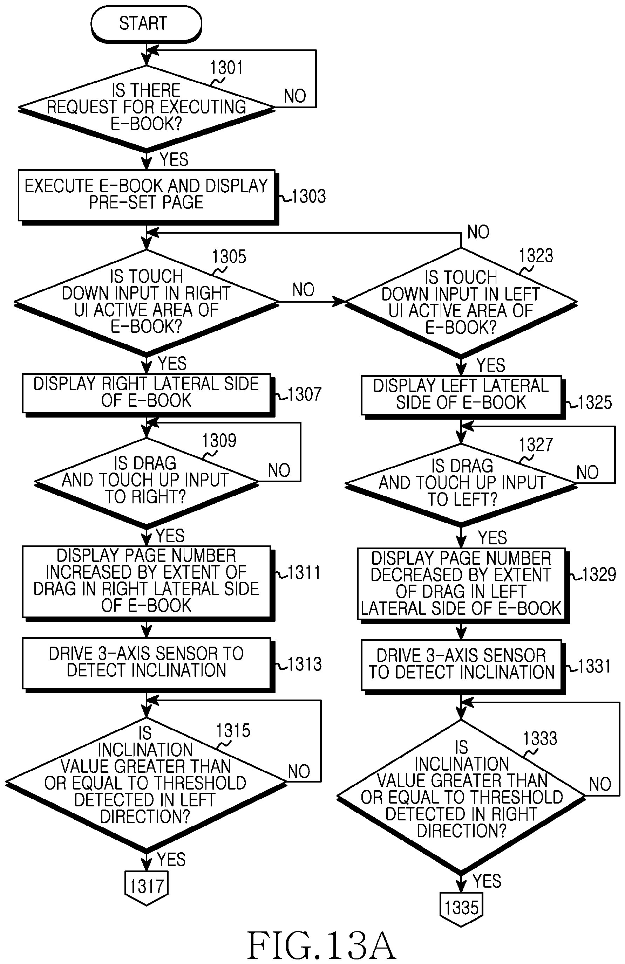

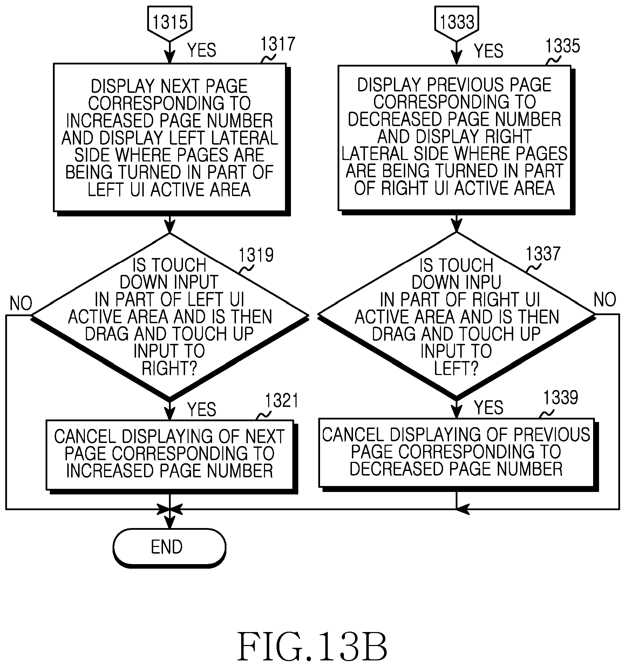

FIG. 13A and FIG. 13B are flowcharts illustrating an example of a method for tuning pages of an e-book in an analog fashion by using a 3-axis sensor in a portable terminal having an e-book function according to an embodiment not part of the present invention.

Referring to FIG. 13A and FIG. 13B, the terminal detects a request for executing the e-book function by user's key manipulation in step 1301.

If the request for executing the e-book function is detected in step 1301, proceeding to step 1303, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 1305, the terminal determines whether a touch down is input in a pre-set right UI active area of the e-book.

If it is determined in step 1305 that the touch down is input in a pre-set right UI active area of the e-book, proceeding to step 1307, the terminal displays a right lateral side of the e-book.

In step 1309, the terminal determines whether a drag is input to the right while maintaining the touch down input.

If it is determined in step 1309 that the drag is input to the right while maintaining the touch down input, proceeding to step 1311, the terminal displays a page number increased by an extent of the drag to the right lateral side of the e-book. Herein, the page number displayed in the right lateral side is increased in proportion to a speed depending on the drag.

In step 1313, the terminal drives the 3-axis sensor to detect an inclination of the terminal. In step 1315, the terminal determines whether an inclination value greater than or equal to a threshold is detected in a left direction.

If it is determined in step 1315 that the inclination value greater than or equal to the threshold is detected in the left direction, proceeding to step 1317, the terminal displays a next page corresponding to the increased page number to the screen, and displays a left lateral side of the turning page in a part of a left UI active area. In this case, the terminal displays a UI for turning several pages forward to the screen at a slower speed than the UI for turning the pages forward on the single-page basis.

In step 1319, the terminal determines whether a touch down is input in the part of the left UI active area and a drag and touch up is input to the right while maintaining the touch down input.

If it is determined in step 1319 that the touch down is input in the part of the left UI active area and the drag and touch up is input to the right while maintaining the touch down input, proceeding to step 1321, the terminal cancels the displaying of the next page corresponding to the increased page number, and returns to a previous page displayed before turning several pages forward.

Otherwise, if it is determined in step 1319 that the touch down is not input in the part of the left UI active area or the drag and touch up is not input to the right while maintaining the touch down input, the procedure of FIG. 13 ends.

Meanwhile, if it is determined in step 1305 that the touch down is not input in the pre-set right UI active area of the e-book, proceeding to step 1323, the terminal determines whether a touch down is input in a pre-set left UI active area of the e-book.

If it is determined in step 1323 that the touch down is input in the pre-set left UI active area of the e-book, proceeding to step 1325, the terminal displays the left lateral side of the e-book.

In step 1327, the terminal determines whether a drag and touch up is input to the left while maintaining the touch down input.

If it is determined in step 1327 that the drag is input to the left while maintaining the touch down input, proceeding to step 1329, the terminal displays a page number decreased by an extent of the drag in the left lateral side of the e-book. Herein, the page number displayed in the left lateral side is decreased in proportion to a speed depending on the drag.

In step 1331, the terminal drives the 3-axis sensor to detect the inclination of the terminal. In step 1333, the terminal determines whether the inclination value greater than or equal to a threshold is detected in the right direction.

Otherwise, if it is determined in step 1333 that the inclination value greater than or equal to the threshold is detected in the right direction, proceeding to step 1335, the terminal displays a previous page corresponding to the decreased page number to the screen, and displays the right lateral side of the turning page in the part of the right UI active area. In this case, the terminal displays a UI for turning several pages back to the screen at a slower speed than the UI for turning the pages back on the single-page basis.

In step 1337, the terminal determines whether a touch down is input in the part of the right UI active area and a drag and touch up is input to the left while maintaining the touch down input.

If it is determined in step 1337 that the touch down is input in the part of the right UI active area and the drag and touch up is input to the left while maintaining the touch down input, proceeding to step 1339, the terminal cancels the displaying of the previous page corresponding to the decreased page number, and returns to a previous page displayed before turning several pages back.

Otherwise, if it is determined in step 1337 that the touch down is not input in the part of the right UI active area or the drag and touch up is not input to the left while maintaining the touch down input, the procedure of FIG. 13 ends.

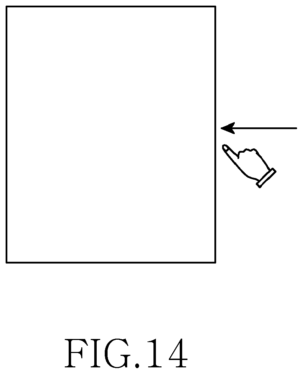

FIG. 14 illustrates an example of a method for turning pages of an e-book in an analog fashion by using an acceleration sensor in a portable terminal having an e-book function according to an example not part of the present invention.

Referring to FIG. 14, upon detection of a request for executing the e-book, the terminal executes the e-book function, displays a pre-set page of the e-book selected by a user to a screen, and thereafter drives an acceleration sensor to detect an acceleration of a lateral side of the terminal.

If an acceleration value greater than or equal to a threshold is detected in a right lateral side as illustrated in FIG. 14, the terminal displays a next page to the screen. Although not shown, if the acceleration value greater than or equal to the threshold is detected in a left lateral side, the terminal can display a previous page to the screen.

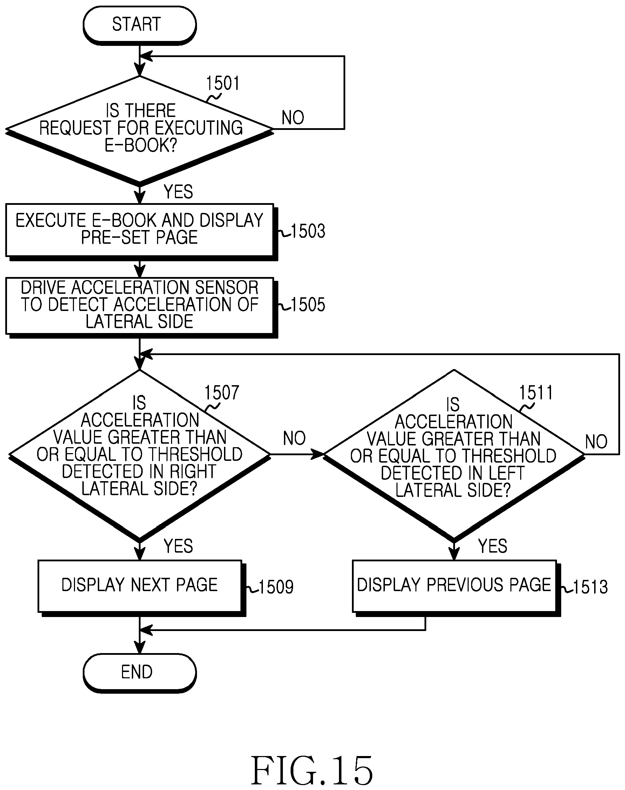

FIG. 15 is a flowchart illustrating a method for turning pages of an e-book in an analog fashion by using an acceleration sensor in a portable terminal having an e-book function according to an example not part of the present invention.

Referring to FIG. 15, the terminal detects a request for executing the e-book function by user's key manipulation in step 1501.

If the request for executing the e-book function is detected in step 1501, proceeding to step 1503, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 1505, the terminal drives the acceleration sensor to detect an acceleration of a lateral side of the terminal. In step 1507, the terminal determines whether an acceleration value greater than or equal to a threshold is detected in the right lateral side.

If the acceleration value greater than or equal to the threshold is detected in the right lateral side in step 1507, proceeding to step 1509, the terminal displays a next page to the screen. Herein, the terminal can display a UI for turning a page forward to the screen. In this case, the terminal can report the movement of the page to the user by using voice, vibration, etc. For example, whenever a page is turned forward, a sound for turning the page can be output.

Otherwise, if it is determined in step 1507 that the acceleration value greater than or equal to the threshold is not detected in the right lateral side, proceeding to step 1511, the terminal determines whether the acceleration value greater than or equal to the threshold is detected in the left lateral side.

If it is determined in step 1511 that the acceleration value greater than or equal to the threshold is detected in the left lateral side, proceeding to step 1513, the terminal displays a previous page to the screen. Herein, the terminal can display a UI for turning pages back to the screen. In this case, the terminal can report the movement of the page to the user by using voice, vibration, etc. For example, whenever a page is turned back, a sound for turning the page can be output.

Otherwise, if it is detected in step 1511 that the acceleration value greater than or equal to the threshold is not detected in the left lateral side, returning to step 1507, the subsequent steps are repeated.

Thereafter, the procedure of FIG. 15 ends.

According to exemplary embodiments of the present invention, a User Interface (UI) for turning pages of an e-book in an analog fashion is provided in a portable terminal having an e-book function. Therefore, a user can change pages of contents in the same natural feeling as turning pages of an actual paper book.

While the present invention has been particularly shown and described with reference to exemplary embodiments thereof, it will be understood by those skilled in the art that various changes in form and details may be made therein without departing from the scope of the present invention as defined by the appended claims.

## Claims

1. A method for turning pages of an electronic-book, e-book, in a portable terminal having an e-book function, the method comprising:
executing (1103) the e-book function;
determining (1105) whether a touch down is input in a pre-set right User Interface, UI, active area of the e-book;
displaying (1107) a right lateral side of the e-book and driving (1109) a 3-axis sensor to detect an inclination value of the portable terminal when the touch down is input in the pre-set right UI active area of the e-book;
determining (1111) whether the inclination value greater than or equal to a threshold is detected in a left direction;
upon detection of the inclination value greater than or equal to the threshold in the left direction (1111-YES), displaying (1113) a next page to a screen on a single-page basis at a speed in proportion to the inclination value detected in the process of detecting the inclination value greater than or equal to the threshold in the left direction;
determining (1115) whether a drag is input to the right while maintaining the touch down input;
stopping (1117) the driving of the 3-axis sensor and displaying (1119) a page number increased by an extent of the drag to the right lateral side of the e-book when the drag is input to the right while maintaining the touch down input;
determining (1121) whether a touch up is input releasing the drag input to the right;
driving (1122) the 3-axis sensor to detect the inclination value of the portable terminal when the touch up is input releasing the drag input to the right;
determining (1124) whether the inclination value greater than or equal to the threshold is detected in the left direction; and
upon detection of the inclination value greater than or equal to the threshold in the left direction (1124-YES), displaying (1123) a next page corresponding to the page number increased by the extent of the drag to the screen.

2. The method of claim 1, further comprising:
displaying (1123) a left lateral side where pages are being turned in a part of the pre-set left UI active area;
determining (1125) whether a touch down is input in the part of the left UI active area, a drag is input to the right while maintaining the touch down input and a touch up is input releasing the drag input to the right; and
canceling (1127) the displaying of the next page corresponding to the increased page number when the touch down is input in the part of the left UI active area, the drag is input to the right while maintaining the touch down input and the touch up is input releasing the drag input to the right.

3. The method of claim 1, wherein upon detection of the inclination value greater than or equal to the threshold in a right direction (1129-YES), displaying (1131) a previous page on the single-page basis to the screen at a speed in proportion to the inclination value detected in the process of detecting the inclination value greater than or equal to the threshold in the right direction.

4. A method for turning pages of an electronic-book, e-book, in a portable terminal having an e-book function, the method comprising:
executing (1203) the e-book function;
determining (1205) whether a touch down is input in a pre-set left User Interface, UI, active area of the e-book;
displaying (1207) a left lateral side of the e-book and driving (1209) a 3-axis sensor to detect an inclination value of the portable terminal when the touch down is input in the pre-set left UI active area of the e-book;
determining (1211) whether the inclination value greater than or equal to a threshold is detected in a right direction;
upon detection of the inclination value greater than or equal to the threshold in the right direction (1211-YES), displaying (1213) a previous page to a screen on a single-page basis at a speed in proportion to the inclination value detected in the process of detecting the inclination value greater than or equal to the threshold in the right direction;
determining (1215) whether a drag is input to the left while maintaining the touch down input;
stopping (1217) the driving of the 3-axis sensor and displaying (1219) a page number decreased by an extent of the drag to the left lateral side of the e-book when the drag is input to the left while maintaining the touch down input;
determining (1221) whether a touch up is input releasing the drag input to the left;
driving (1222) the 3-axis sensor to detect the inclination value of the portable terminal when the touch up is input releasing the drag input to the right;
determining (1224) whether the inclination value greater than or equal to the threshold is detected in the right direction; and
upon detection of the inclination value greater than or equal to the threshold in the right direction (1224-YES), displaying (1223) a previous page corresponding to the page number decreased by the extent of the drag to the screen.

5. The method of claim 4, further comprising:
displaying (1223) a right lateral side where pages are being turned in a part of the pre-set right UI active area;
determining (1225) whether a touch down is input in the part of the right UI active area, a drag is input to the left while maintaining the touch down input and a touch up is input releasing the drag input to the left; and
canceling (1227) the displaying of the previous page corresponding to the decreased page number when the touch down is input in the part of the right UI active area, the drag is input to the left while maintaining the touch down input and the touch up is input releasing the drag input to the left.

6. The method of claim 4, wherein upon detection of the inclination value greater than or equal to the threshold in a left direction (1229-YES), displaying (1231) a next page on the single-page basis to the screen at a speed in proportion to the inclination value detected in the process of detecting the inclination value greater than or equal to the threshold in the left direction.

7. A portable terminal comprising a controller, a touch panel and a display unit wherein the controller is arranged to carry out a method according to any of the claims 1 to 6.

## Patentansprüche

1. Verfahren zum Umblättern von Seiten eines elektronischen Buchs, E-Book, in einem tragbaren Endgerät mit einer E-Book-Funktion, wobei das Verfahren Folgendes umfasst:
Durchführen (1103) der E-Book-Funktion;
Bestimmen (1105), ob ein Touch-Down in einen voreingestellten rechten Benutzeroberflächen(UI)-Aktivbereich des E-Books eingegeben wird;
Anzeigen (1107) einer rechten lateralen Seite des E-Books und Antreiben (1109) eines 3-Achsen-Sensors, um einen Neigungswert des tragbaren Endgeräts zu erfassen, wenn der Touch-Down in den voreingestellten rechten UI-Aktivbereich des E-Books eingegeben wird;
Bestimmen (1111), ob der Neigungswert, der größer als oder gleich einem Schwellenwert ist, in einer linken Richtung erfasst wird;
beim Erfassen des Neigungswerts, der größer als oder gleich dem Schwellenwert in der linken Richtung (1111-YES) ist, Anzeigen (1113) einer nächsten Seite auf einem Bildschirm auf einer Einzelseitenbasis mit einer Geschwindigkeit im Verhältnis zu dem Neigungswert, der in dem Verfahren des Erfassens des Neigungswerts erfasst wird, der größer als oder gleich dem Schwellenwert in der linken Richtung ist;
Bestimmen (1115), ob ein Ziehen nach rechts eingegeben wird, während die Touch-Down-Eingabe aufrechterhalten wird;
Anhalten (1117) des Antreibens des 3-Achsen-Sensors und Anzeigen (1119) einer Seitenzahl, die um ein Ausmaß des Ziehens auf die rechte laterale Seite des E-Books erhöht ist, wenn das Ziehen nach rechts eingegeben wird, während die Touch-Down-Eingabe aufrechterhalten wird;
Bestimmen (1121), ob ein Touch-Up eingegeben wird, der die Zieheingabe nach rechts freigibt;
Antreiben (1122) des 3-Achsen-Sensors, um den Neigungswert des tragbaren Endgeräts zu erfassen, wenn der Touch-Up eingegeben wird, der die Zieheingabe nach rechts freigibt;
Bestimmen (1124), ob der Neigungswert, der größer als oder gleich dem Schwellenwert ist, in der linken Richtung erfasst wird; und
beim Erfassen des Neigungswerts, der größer als oder gleich dem Schwellenwert in der linken Richtung (1124-YES) ist, Anzeigen (1123) einer nächsten Seite, die der Seitenzahl entspricht, die um das Ausmaß des Ziehens auf den Bildschirm erhöht wird.

2. Verfahren nach Anspruch 1, welches ferner umfasst:
Anzeigen (1123) einer linken lateralen Seite, auf der Seiten in einem Teil des voreingestellten linken UI-Aktivbereichs umgeblättert werden;
beim Bestimmen (1125), ob ein Touch-Down in den Teil des linken UI-Aktivbereichs eingegeben wird, wird ein Ziehen nach rechts eingegeben, während die Touch-Down-Eingabe aufrechterhalten wird, und ein Touch-Up wird eingegeben, der die Zieheingabe nach rechts freigibt; und
beim Annullieren (1127) des Anzeigens der nächsten Seite, die der erhöhten Seitenzahl entspricht, wenn der Touch-Down in den Teil des linken UI-Aktivbereichs eingegeben wird, wird das Ziehen nach rechts eingegeben, während die Touch-Down-Eingabe aufrechterhalten wird, und der Touch-Up wird eingegeben, der die Zieheingabe nach rechts freigibt.

3. Verfahren nach Anspruch 1, wobei beim Erfassen des Neigungswerts, der größer als oder gleich dem Schwellenwert in einer rechten Richtung (1129-YES) ist, eine vorherige Seite auf der Einzelseitenbasis auf dem Bildschirm mit einer Geschwindigkeit im Verhältnis zu dem Neigungswert angezeigt (1131) wird, der in dem Verfahren des Erfassens des Neigungswerts erfasst wird, der größer als oder gleich dem Schwellenwert in die rechte Richtung ist.

4. Verfahren zum Umblättern von Seiten eines elektronischen Buchs, E-Book, in einem tragbaren Endgerät mit einer E-Book-Funktion, wobei das Verfahren Folgendes umfasst:
Ausführen (1203) der E-Book-Funktion;
Bestimmen (1205), ob ein Touch-Down in einen voreingestellten linken Benutzeroberflächen(UI)-Aktivbereich des E-Books eingegeben wird;
Anzeigen (1207) einer linken lateralen Seite des E-Books und Antreiben (1209) eines 3-Achsen-Sensors, um einen Neigungswert des tragbares Endgeräts zu erfassen, wenn der Touch-Down in den voreingestellten linken UI-Aktivbereich des E-Books eingegeben wird;
Bestimmen (1211), ob der Neigungswert, der größer als oder gleich einem Schwellenwert ist, in einer rechten Richtung erfasst wird;
beim Erkennen des Neigungswerts, der größer als oder gleich dem Schwellenwert in die rechte Richtung (1211-YES) ist, Anzeigen (1213) einer vorherigen Seite auf einem Bildschirm auf einer Einzelseitenbasis mit einer Geschwindigkeit im Verhältnis zu dem Neigungswert, der in dem Verfahren des Erfassens des Neigungswerts erfasst wird, der größer als oder gleich dem Schwellenwert in die rechte Richtung ist;
Bestimmen (1215), ob ein Ziehen nach links eingegeben wird, während die Touch-Down-Eingabe aufrechterhalten wird;
Anhalten (1217) des Antreibens des 3-Achsen-Sensors und Anzeigen (1219) einer Seitenzahl, die um ein Ausmaß des Ziehens auf die linke laterale Seite des E-Books verringert wird, wenn das Ziehen nach links eingegeben wird, während die Touch-Down-Eingabe aufrechterhalten wird;
Bestimmen (1221), ob ein Touch-Up eingegeben wird, der die Zieheingabe nach links freigibt;
Antreiben (1222) des 3-Achsen-Sensors, um den Neigungswert des tragbaren Endgeräts zu erfassen, wenn der Touch-Up eingegeben wird, der die Zieheingabe nach rechts freigibt;
Bestimmen (1224), ob der Neigungswert, der größer als oder gleich dem Schwellenwert ist, in der rechten Richtung erfasst wird; und
beim Erkennen des Neigungswerts, der größer als oder gleich dem Schwellenwert in der rechten Richtung (1224-YES) ist, Anzeigen (1223) einer vorherigen Seite, die der Seitenzahl entspricht, die um das Ausmaß des Ziehens auf den Bildschirm verringert wird.

5. Verfahren nach Anspruch 4, welches ferner umfasst:
Anzeigen (1223) einer rechten lateralen Seite, auf der Seiten in einem Teil des voreingestellten rechten UI-Aktivbereichs umgeblättert werden;
beim Bestimmen (1225), ob ein Touch-Down in den Teil des rechten UI-Aktivbereichs eingegeben wird, wird ein Ziehen nach links eingegeben, während die Touch-Down-Eingabe aufrechterhalten wird, und ein Touch-Up wird eingegeben, der die Zieheingabe nach links freigibt; und
beim Annullieren (1227) des Anzeigens der vorherigen Seite, die der verringerten Seitenzahl entspricht, wenn der Touch-Down in den Teil des rechten UI-Aktivbereichs eingegeben wird, wird das Ziehen nach links eingegeben, wäherend die Touch-Down-Eingabe aufrechterhalten wird, und der Touch-Up wird eingegeben, der die Zieheingabe nach links freigibt.

6. Verfahren nach Anspruch 4, wobei beim Erfassen des Neigungswerts, der größer als oder gleich dem Schwellenwert in einer linken Richtung (1229-YES) ist, eine nächste Seite auf der Einzelseitenbasis auf dem Bildschirm mit einer Geschwindigkeit im Verhältnis zu dem Neigungswert angezeigt (1231) wird, der in dem Verfahren des Erfassens des Neigungswerts erfasst wird, der größer als oder gleich dem Schwellenwert in der linken Richtung ist.

7. Tragbares Endgerät, welches eine Steuerung, ein Touchpanel und eine Anzeigeeinheit umfasst, wobei die Steuerung angeordnet ist, um ein Verfahren nach einem der Ansprüche 1 bis 6 auszuführen.

## Revendications

1. Procédé pour tourner les pages d'un livre électronique, e-book, dans un terminal portable ayant une fonction de livre électronique, le procédé comprenant :
exécuter (1103) la fonction de livre électronique ;
déterminer (1105) si une entrée tactile vers le bas est entrée dans une zone active droite d'interface utilisateur, UI, prédéfinie du livre électronique ;
afficher (1107) un côté latéral droit du livre électronique et piloter (1109) un capteur à 3 axes pour détecter une valeur d'inclinaison du terminal portable lorsque l'entrée tactile vers le bas est entrée dans la zone active droite d'interface utilisateur UI prédéfinie du livre électronique ;
déterminer (1111) si la valeur d'inclinaison supérieure ou égale à un seuil est détectée vers la gauche ;
lors de la détection de la valeur d'inclinaison supérieure ou égale au seuil vers la gauche (1111f), afficher (1113) une page suivante sur un écran sur une seule page à une vitesse proportionnelle à la valeur d'inclinaison détectée dans le processus de détection de la valeur d'inclinaison supérieure ou égale au seuil vers la gauche ;
déterminer (1115) si un glissement est entré vers la droite tout en maintenant l'entrée tactile vers le bas ;
arrêter (1117) le pilotage du capteur à 3 axes et afficher (1119) un numéro de page augmenté d'une étendue du glissement vers le côté latéral droit du livre électronique lorsque le glissement est entré vers la droite tout en maintenant l'entrée tactile vers le bas ;
déterminer (1121) si une entrée tactile vers le haut est entrée, libérant l'entrée de glissement vers la droite ;
piloter (1122) le capteur à 3 axes pour détecter la valeur d'inclinaison du terminal portable lorsque l'entrée tactile vers le haut est entrée, libérant l'entrée de glissement vers la droite ;
déterminer (1124) si la valeur d'inclinaison supérieure ou égale au seuil est détectée vers la gauche ; et
lors de la détection de la valeur d'inclinaison supérieure ou égale au seuil dans la direction gauche (1124-YES), afficher (1123) une page suivante correspondant au numéro de page augmenté de l'étendue du glissement vers l'écran.

2. Procédé selon la revendication 1, comprenant en outre :
afficher (1123) un côté latéral gauche où les pages sont tournées dans une partie de la zone active gauche d'interface utilisateur prédéfinie ;
déterminer (1125) si une entrée tactile vers le bas est entrée dans la partie de la zone active gauche de l'interface utilisateur, un glissement est entré vers la droite tout en maintenant l'entrée tactile vers le bas et une entrée tactile vers le haut est entrée libérant l'entrée de glissement vers la droite ; et
annuler (1127) l'affichage de la page suivante correspondant au numéro de page augmenté lorsque l'entrée tactile vers le bas est entrée dans la partie de la zone active gauche de l'interface utilisateur, le glissement est entré vers la droite tout en maintenant l'entrée tactile vers le bas et l'entrée tactile vers le haut est entrée libérant l'entrée de glissement vers la droite.

3. Procédé selon la revendication 1, où lors de la détection de la valeur d'inclinaison supérieure ou égale au seuil vers la droite (1129-YES), afficher (1131) une page précédente sur la base d'une seule page à l'écran à une vitesse proportionnelle à la valeur d'inclinaison détectée dans le processus de détection de la valeur d'inclinaison supérieure ou égale au seuil vers la droite.

4. Procédé pour tourner les pages d'un livre électronique, dans un terminal portable ayant une fonction de livre électronique, le procédé comprenant :
exécuter (1203) la fonction de livre électronique ;
déterminer (1205) si une entrée tactile vers le bas est entrée dans une zone active gauche d'interface utilisateur UI prédéfinie du livre électronique ;
afficher (1207) un côté latéral gauche du livre électronique et piloter (1209) un capteur à 3 axes pour détecter une valeur d'inclinaison du terminal portable lorsque l'entrée tactile vers le bas est entrée dans la zone active gauche UI prédéfinie du livre électronique ;
déterminer (1211) si la valeur d'inclinaison supérieure ou égale à un seuil est détectée vers la droite ;
lors de la détection de la valeur d'inclinaison supérieure ou égale au seuil vers la droite (1211-YES), afficher (1213) une page précédente sur un écran sur une seule page à une vitesse proportionnelle à la valeur d'inclinaison détectée dans le processus de détection de la valeur d'inclinaison supérieure ou égale au seuil vers la droite ;
déterminer (1215) si un glissement est entré vers la gauche tout en maintenant l'entrée tactile vers le bas ;
arrêter (1217) le pilotage du capteur à 3 axes et afficher (1219) un numéro de page diminué d'une étendue du glissement vers le côté latéral gauche du livre électronique lorsque le glissement est entré vers la gauche tout en maintenant l'entrée tactile vers le bas ;
déterminer (1221) si une entrée tactile vers le haut est entrée, libérant l'entrée de glissement vers la gauche ;
piloter (1222) le capteur à 3 axes pour détecter la valeur d'inclinaison du terminal portable lorsque l'entrée tactile vers le haut est entrée, libérant l'entrée de glissement vers la droite ;
déterminer (1224) si la valeur d'inclinaison supérieure ou égale au seuil est détectée vers la droite ; et
lors de la détection de la valeur d'inclinaison supérieure ou égale au seuil vers la droite (1224-YES), afficher (1223) une page précédente correspondant au numéro de page diminué de l'étendue du glissement vers l'écran.

5. Procédé selon la revendication 4, comprenant en outre :
afficher (1223) un côté latéral droit où les pages sont tournées dans une partie de la zone active droite d'interface utilisateur prédéfinie ;
déterminer (1225) si une entrée tactile vers le bas est entrée dans la partie de la zone active droite de l'interface utilisateur, un glissement est entré vers la gauche tout en maintenant l'entrée tactile vers le bas et une entrée tactile vers le haut est entrée libérant l'entrée de glissement vers la gauche ; et
annuler (1227) l'affichage de la page précédente correspondant au numéro de page diminué lorsque l'entrée tactile vers le bas est entrée dans la partie de la zone active droite de l'interface utilisateur, le glissement est entré vers la gauche tout en maintenant l'entrée tactile vers le bas et l'entrée tactile vers le haut est entrée libérant l'entrée de glissement vers la gauche.

6. Procédé selon la revendication 4, où lors de la détection de la valeur d'inclinaison supérieure ou égale au seuil vers la gauche (1229-YES), afficher (1231) une page suivante sur la base d'une seule page à l'écran à une vitesse proportionnelle à la valeur d'inclinaison détectée lors du processus de détection de la valeur d'inclinaison supérieure ou égale au seuil vers la gauche.

7. Terminal portable comprenant un contrôleur, un écran tactile et une unité d'affichage où le contrôleur est prévu pour exécuter un procédé selon l'une quelconque des revendications 1 à 6.
